# EUROPEAN PATENT SPECIFICATION

(11) **EP 0 844 123 B1**
(45) Date of publication and mention of the grant of the patent: **04.02.2004**
(21) Application number: 97120088.6
(22) Date of filing: 17.11.1997
(51) Int. Cl.: B60J 5/06

(54) **A side part for a motor vehicle, particularly a coupé, having longitudinally-slidable doors**
Ein Seitenteil für ein Motorfahrzeug, insbesondere ein Coupe, mit längsverschiebbaren Türen
Une partie latérale pour un véhicule à moteur, en particulier un coupé, comprenant des portes pouvant coulisser longitudinalement

(30) Priority: 20.11.1996 IT TO960939
(43) Date of publication of application: 27.05.1998
(73) Proprietor: Marchetti, Ernesto, 10142 Torino (IT)
(72) Inventor: Marchetti, Ernesto, 10142 Torino (IT)
(74) Representative: Serra, Francesco

(56) References cited:
- FR-A- 1 424 500
- GB-A- 738 486
- GB-A- 1 316 779
- GB-A- 2 126 173
- US-A- 3 594 036
- US-A- 4 068 407

## Description

The present invention concerns the side part for a motor vehicle, particularly a coupé, having longitudinally-slidable doors.

Coupé-style motor vehicles typically have an opening on each side or flank for entering or leaving the vehicle; this opening is normally of significant dimensions and, consequently, the associated door is rather large which means that a substantial space must be available when it is parked between two adjacent vehicles, or in a garage of limited dimensions in order to open it, even only partly, in order, for example, to enter or leave the motor vehicle.

Door-opening systems have been proposed in which the doors turn upwardly, remaining substantially parallel to the side, but although these systems solve the problem of space, they are very complicated and, at the same time, also worsen accessibility to the interior of the motor vehicle.

Systems according to the above are known by GB-A- 2 126 173.

The object of the present invention is to provide a side part for a motor vehicle, with a system for opening the doors which overcomes the aforesaid disadvantages, which is easy to produce and inexpensive.

The present invention achieves the aforesaid objects by means of a side part for a motor vehicle including a front panel, a rear panel, a quarterlight connected to the said front panel, a pillar connected to the said rear panel and an opening for entering or leaving the motor vehicle, (side part of the type referred to in the preamble of claim 1 and known from GB-A- 2 126 173), having the characteristics specifically referred to in the following claims.

Further characteristics and advantages of the present invention will become clear in the course of the following detailed description, given purely by way of non-limitative example, with reference to the accompanying drawings, in which:
- Figure 1 is a perspective view of a motor vechle including a side part realised according to the invention, with the opening for entering and leaving the motor vehicle closed;
- Figure 2 is a perspective view of the motor vehicle of Figure 1 with the opening open;
- Figure 3 is a partial perspective view of one of the sliding doors of the motor vehicle with its movements with respect to the fixed part of the vehicle body being indicated; and
- Figure 4 is a partially transparent front view of the side part of a motor vehicle according to the invention.

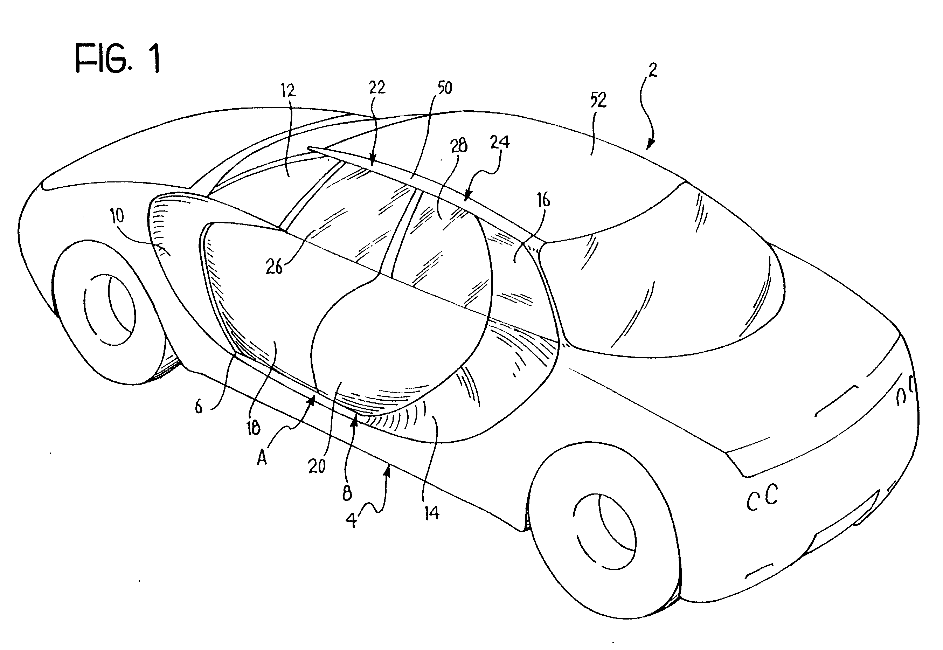

With reference to Figures 1 to 4, the reference numeral 2 indicates a motor vehicle including a left side part or flank 4 according to the invention, with reference to the direction of travel. The following, which refers to the side 4, applies identically to the opposite (right) side which is not visible in the drawings.

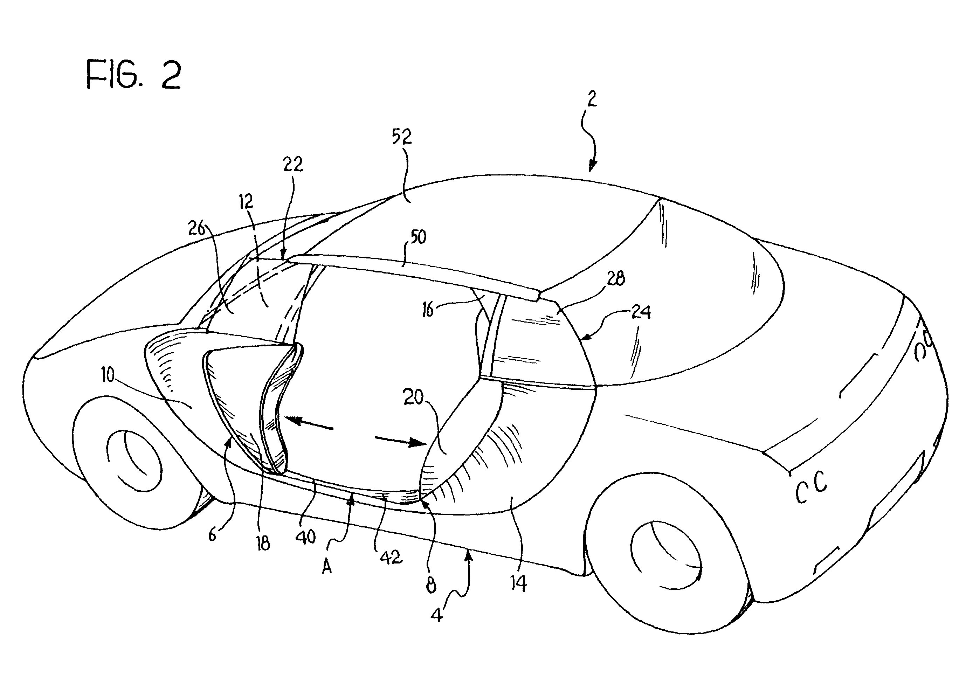

The side 4 includes an aperture A for entering and/or leaving the motor vehicle. The aperture A is closed (see Figure 1) by a front half door 6 and a rear half door 8, shown open in Figure 2.

The side 4 includes a front panel 10 with an associated quarterlight 12 and a rear panel 14 associated with a rear pillar 16. Each half door, 6 and 8 respectively, includes a lower part 18 and 20 respectively, and an upper part 22 and 24 respectively, fixed to the respective lower part 18, 20.

The upper parts 22 and 24 of the half doors 6 and 8 comprise windows 26, 28. The window 28 of the rear half door 8 is fixed, that is, it cannot be opened, while the window 26 of the front half door 6 is longitudinally slidable, at least partially.

The lower parts 18, 20 of the front and rear half doors 6 and 8 have an external profile that is substantially recessed with respect to the panels with which they are associated, and the upper parts 22 and 24, together with the windows 26 and 28 fixed to the associated lower parts 18 and 20 of the front and rear half doors 6 and 8, are substantially flush with the quarterlight 12 and the pillar 16.

The downwardly facing lower edges of the half doors 6 and 8, are slidable along curved rails 40 and 42 on the floor of the motor vehicle, while the upper edges 22, 24 of the half doors 6 and 8 are slidable along a channel 50 at the top of the side and fixed to the roof 52.

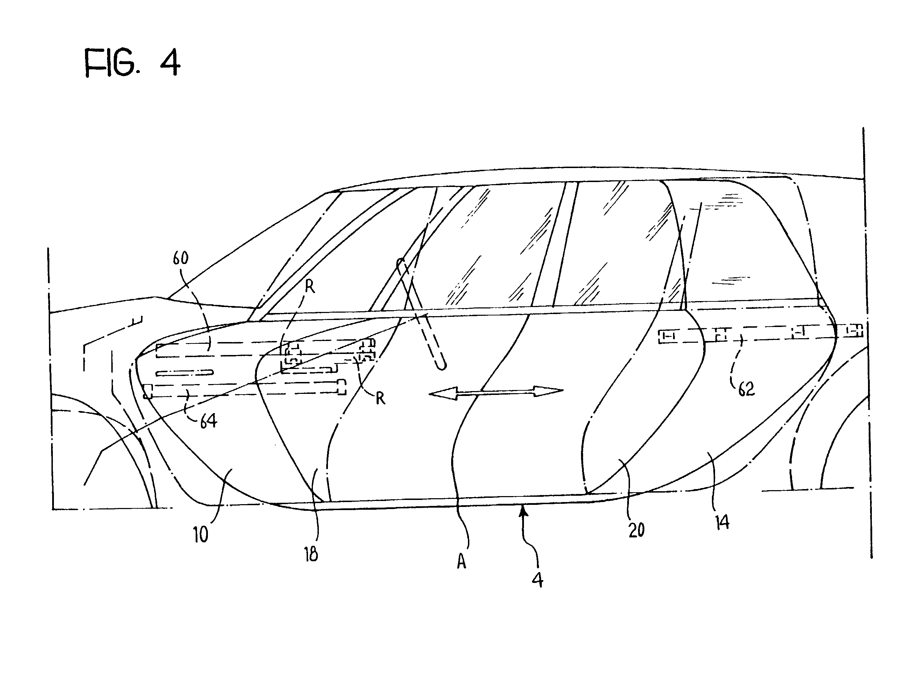

Front and rear guide elements 60 and 62, for example slide guides are present at waist height of the enclosure of the panels 10 and 14. The guide elements 60 and 62 are also preferably curved and include angle compensating couplings R, visible in Figure 4.

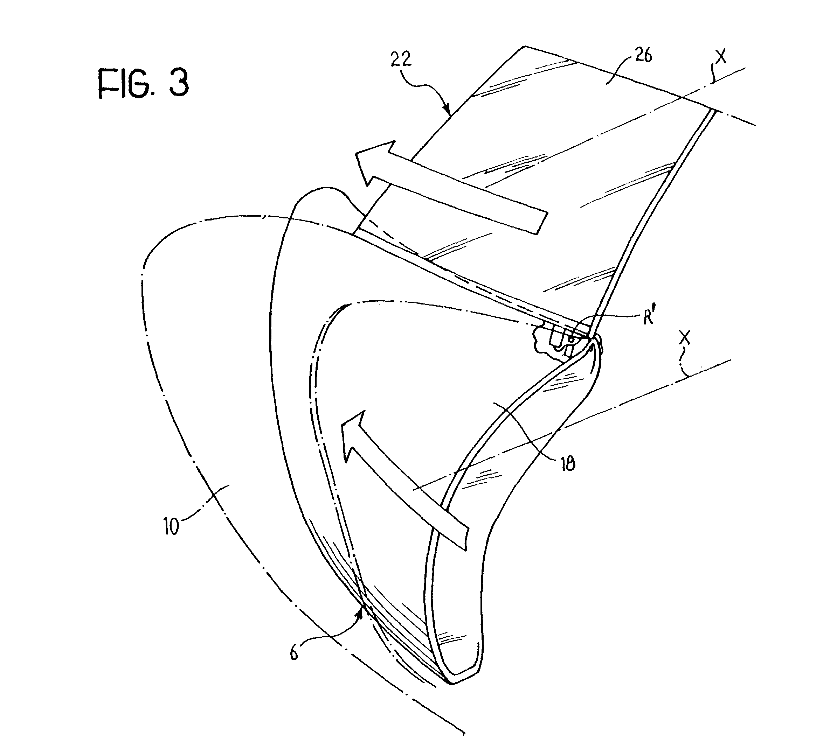

The half doors 6 and 8 are opened in the following way. If the two half doors 6 and 8 are considered in their closed condition, the user, by pushing the front half door 6 towards the front panel 10, causes the front half door 6 to slide along the lower rail 40 and the top retaining guide 60 while, at the same time, the upper part 22 and the associated window 26 slide longitudinally and parallel to each other by virtue of an angle compensating coupling R' between themselves and the lower part 18, until they partially overlie the front quarterlight 12, guided at the top by the channel 50 (see Figure 3).

At the same time, the rotational translatory movement is transmitted in the opposite direction by motion reversing means which are in themselves known and not illustrated for simplicity, to the rear half door 8, the lower part 20 of which translates by rotation along the rear lower rail 42 and the rear, waist-height intermediate guide 62 while, at the same time, the upper part 24 and the associated window 28 slide longitudinally and parallel to each other by virtue of an angle compensating coupling R' between themselves and the lower part 20 until they overlie the rear pillar 16.

At the end of the above-described operations, the front half door 6 and the rear half door 8, by sliding along the lower rails, have penetrated, at least partly into the body of the motor vehicle, thus assuming the configuration of Figure 2.

In this configuration, the aperture A is substantially open, enabling the user to get into or out of the motor vehicle.

The movement of the front half door 6 can be achieved preferably by means of hydraulic or pneumatic actuators 64, illustrated schematically in Figure 4.

The front half door 6 and rear half door 8 are locked in their closed position by a lock which is known and not illustrated for simplicity.

From the above, the advantages of a motor vehicle side part according to the invention are clear. Entry into and exit from the motor vehicle is greatly facilitated in that the opening of the doors (half doors) does not in this case require any space.

The recessing of the surface of the half doors with respect to the panels gives the motor vehicle a very striking and characteristic appearance.

That which has been described above is applicable to any type of motor vehicle, for example single-compartment, spider, cabriolet, and saloon.

Naturally, the principle of the invention remaining the same, wide variations may be introduced to what has been described and illustrated without by this departing from the ambit of the invention itself. For example, the linear actuators for opening and closing the half doors may be replaced by curvilinear actuators, thus enabling the waist height guides for the half doors to be dispersed with.

## Claims

1. A side part for a motor vehicle (2) including a front panel (10), a front quarterlight (12), a rear panel (14), a rear pillar (16) and an aperture (A) for entering and leaving the motor vehicle (2), said opening (A) being closed by two half doors (6, 8) which slide in opposite directions from each other,
**characterised in that** each of the two side doors (6, 8) comprises a lower part (18, 20) the external profile of which is substantially recessed with respect to that of the panel part (10, 14) with which it is associated, and an upper part (22, 24) fitted to the associated lower part (18, 20), the said upper part (22, 24) facing the vehicle body being substantially flush with the quarterlight (12) and the pillar (16).

2. A side part for a motor vehicle (2) according to claim 1, **characterised in that** the lower parts (18, 20) of the said half doors (6, 8), when they are moving away from each other in order to open the aperture (A), penetrate at least partly into the interior of the panel (10, 14) with which they are rotationally associated while, at the same time, the upper part (22, 24) of the said half doors (6, 8) slides longitudinally and parallel to itself along a channel (50) superimposing itself over the quarterlight (12) and the pillar (16).

3. A side part for a motor vehicle (2) according to any preceding claim, **characterised in that** the said upper parts (22, 24), fixed to the associated lower parts (18, 20), include a front window (26) and a rear window (28) respectively.

4. A side part for a motor vehicle (2) according to any preceding claim, **characterised in that** the lower edges of the lower parts (18, 20) of the half doors (6, 8) slide along rails (40, 42) disposed in the lower part of the floor of the motor vehicle (2) .

5. A side part for a motor vehicle (2) according to any preceding claim, **characterised in that** opening the front half door (6) causes the rear half door (8) to open in the opposite sense.

6. A side part for a motor vehicle (2) according to any preceding claim, **characterised in that** the opening of the rear half door (8) is caused by a motion reversing pulley.

7. A side part for a motor vehicle (2) according to any preceding claim, **characterised in that** it includes guide elements (60, 62) at waist height for the said half doors (6, 8), disposed between the front and rear panels (10, 14) and the half doors (6, 8).

8. A side part for a motor vehicle (2) according to any preceding claim, **characterised in that** angle compensating devices (R') are located between the lower parts (18, 20) and the upper parts (22, 24) of the half doors (6, 8).

9. A side part for a motor vehicle (2) according to any preceding claim, **characterised in that** angle compensating devices (R) are located between the upper edge of the lower parts (18, 20) of the said half doors (6, 8) and the panels (10, 14).

10. A motor vehicle including a side part according to at least one of the preceding claims.

## Patentansprüche

1. Seitenteil für ein Kraftfahrzeug (2) mit einer vorderen Wand (10), einem vorderen Teilfenster (12), einer hinteren Wand (14), einer hinteren Stütze (16) und einer Öffnung (A) zum Einsteigen in das und zum Aussteigen aus dem Kraftfahrzeug (2), wobei die Öffnung (A) mit zwei Halbtüren (6, 8) verschlossen wird, die zueinander in entgegengesetzte Richtungen verschiebbar sind,
**dadurch gekennzeichnet, dass** jede der beiden Seitentüren (6, 8) einen unteren Teil (18, 20), dessen äußere Form im Wesentlichen entsprechend der Form jenes Wandteils (10, 14) ausgeschnitten ist, dem er zugeordnet ist, sowie einen oberen Teil (22, 24) enthält, der am zugeordneten unteren Teil (18, 20) befestigt ist, wobei der obere Teil (22, 24) gegenüber der Fahrzeugkarosserie im Wesentlichen fluchtend mit dem Teilfenster (12) und der Stütze (16) verläuft.

2. Seitenteil für ein Kraftfahrzeug (2) gemäß Anspruch 1, **dadurch gekennzeichnet, dass** die unteren Teile (18, 20) der Halbtüren (6, 8), wenn sie sich voneinander weg bewegen, um die Öffnung (A) zu öffnen, zumindest teilweise in das Innere der Wand (10, 14) eindringen, der sie rotationsmäßig zugeordnet sind, während gleichzeitig der obere Teil (22, 24) der Halbtüren (6, 8) in Längsrichtung und parallel zu sich selbst entlang eines Kanals (50) gleitet, wobei er sich selbst über das Teilfenster (12) und die Stütze (16) legt.

3. Seitenteil für ein Kraftfahrzeug (2) gemäß irgendeinem der bisherigen Ansprüche, **dadurch gekennzeichnet, dass** die oberen Teile (22, 24), die an den zugeordneten unteren Teilen (18, 20) befestigt sind, ein vorderes Fenster (26) bzw. ein hinteres Fenster (28) aufweisen.

4. Seitenteil für ein Kraftfahrzeug (2) gemäß irgendeinem der bisherigen Ansprüche, **dadurch gekennzeichnet, dass** die unteren Kanten der unteren Teile (18, 20) der Halbtüren (6, 8) entlang von Schienen (40, 42) verschiebbar sind, die im unteren Teil des Bodens des Kraftfahrzeugs (2) angeordnet sind.

5. Seitenteil für ein Kraftfahrzeug (2) gemäß irgendeinem der bisherigen Ansprüche, **dadurch gekennzeichnet, dass** das Öffnen der vorderen Halbtüre (6) bewirkt, dass sich die hintere Halbtüre (8) in die entgegengesetzte Richtung öffnet.

6. Seitenteil für ein Kraftfahrzeug (2) gemäß irgendeinem der bisherigen Ansprüche, **dadurch gekennzeichnet, dass** das Öffnen der hinteren Halbtüre (8) durch eine Bewegungsumkehrrolle bewirkt wird.

7. Seitenteil für ein Kraftfahrzeug (2) gemäß irgendeinem der bisherigen Ansprüche, **dadurch gekennzeichnet, dass** es in Hüfthöhe Führungselemente (60, 62) für die Halbtüren (6, 8) aufweist, die zwischen der vorderen und der hinteren Wand (10, 14) und den Halbtüren (6, 8) angeordnet sind.

8. Seitenteil für ein Kraftfahrzeug (2) gemäß irgendeinem der bisherigen Ansprüche, **dadurch gekennzeichnet, dass** Winkelkompensationseinrichtungen (R') zwischen den unteren Teilen (18, 20) und den oberen Teilen (22, 24) der Halbtüren (6, 8) angeordnet sind.

9. Seitenteil für ein Kraftfahrzeug (2) gemäß irgendeinem der bisherigen Ansprüche, **dadurch gekennzeichnet, dass** Winkelkompensationseinrichtungen (R) zwischen der oberen Kante der unteren Teile (18, 20) der Halbtüren (6, 8) und den Wänden (10, 14) angeordnet sind.

10. Kraftfahrzeug, das einen Seitenteil gemäß zumindest einem der bisherigen Ansprüche aufweist.

## Revendications

1. Partie latérale pour un véhicule à moteur (2) comprenant un panneau avant (10), une glace de custode avant (12), un panneau arrière (14), un montant arrière (16) et une ouverture (A) permettant d'entrer et de sortir du véhicule à moteur (2), ladite ouverture (A) étant fermée par deux demi-portes (6, 8) qui coulissent dans des directions opposées l'une par rapport à l'autre,
**caractérisée en ce que** chacune des deux portes latérales (6, 8) comprend une partie inférieure (18, 20) dont le profil extérieur est sensiblement en évidement par rapport à celui de la partie formant panneau (10, 14) à laquelle elle est associée, et une partie supérieure (22, 24) raccordée à la partie inférieure associée (18, 20) , ladite partie supérieure (22, 24) qui garnit la carrosserie du véhicule affleurant sensiblement à la glace de custode avant (12) et au montant (16).

2. Partie latérale pour un véhicule à moteur (2) selon la revendication 1, **caractérisée en ce que** les parties inférieures (18, 20) des dites demi-portes (6, 8), lorsqu'elles s'écartent l'une de l'autre pour libérer l'ouverture (A), pénètrent au moins partiellement à l'intérieur du panneau (10, 14) auquel elles sont associées de manière rotative, alors qu'au même moment la partie supérieure (22, 24) des dites demi-portes (6, 8) coulisse longitudinalement parallèlement à elle-même le long d'un canal (50) en se superposant à la glace de custode (12) et au montant (16).

3. Partie latérale pour un véhicule à moteur (2) selon l'une quelconque des revendications précédentes, **caractérisée en ce que** les dites parties supérieures (22, 24) qui sont fixées aux parties inférieures associées (18, 20) comprennent respectivement une fenêtre avant (26) et une fenêtre arrière (28).

4. Partie latérale pour un véhicule à moteur (2) selon l'une quelconque des revendications précédentes, **caractérisée en ce que** les bords inférieurs des parties inférieures (18, 20) des demi-portes (6, 8) coulissent le long de rails (40, 42) disposés dans la partie inférieure du plancher du véhicule à moteur (2).

5. Partie latérale pour un véhicule à moteur (2) selon l'une quelconque des revendications précédentes, **caractérisée en ce que** l'ouverture de la demi-porte avant (6) provoque l'ouverture de la demi-porte arrière (8) dans le sens opposé.

6. Partie latérale pour un véhicule à moteur (2) selon l'une quelconque des revendications précédentes, **caractérisée en ce que** l'ouverture de la demi-porte arrière (8) est effectuée par une poulie à inversion de mouvement.

7. Partie latérale d'un véhicule à moteur (2) selon l'une quelconque des revendications précédentes, **caractérisée en ce qu'**elle comprend des éléments de guidage (60, 62) pour lesdites demi-portes (6, 8), qui sont disposés à hauteur de ceinture entre les panneaux avant et arrière (10, 14) et les demi-portes (6, 8).

8. Partie latérale pour un véhicule à moteur (2) selon l'une quelconque des revendications précédentes, **caractérisée en ce que** des dispositifs de compensation angulaire (R') sont placés entre les parties inférieures (18, 20) et les parties supérieures (22, 24) des demi-portes (6, 8).

9. Partie latérale pour un véhicule à moteur (2) selon l'une quelconque des revendications précédentes, **caractérisée en ce que** les dispositifs de compensation angulaire (R) sont placés entre le bord supérieur des parties inférieures (18, 20) desdites demi-portes (6, 8) et les panneaux (10, 14).

10. Véhicule à moteur comprenant une partie latérale selon au moins une des revendications précédentes.
